# EUROPÄISCHE PATENTSCHRIFT

(11) **EP 1 480 221 B1**
(45) Veröffentlichungstag und Bekanntmachung des Hinweises auf die Patenterteilung: **27.07.2005**
(21) Anmeldenummer: 03090156.5
(22) Anmeldetag: 23.05.2003
(51) Int. Cl.: G11B 33/04, E05B 73/00

(54) **Verpackung für einen scheibenförmigen Aufzeichnungsträger und Verfahren zum Konfektionieren einer solchen Verpackung**
Storage case for a disk-formed recording medium and manufacturing method for such a storage case
Emballage pour support d'enregistrement sous forme de disque et méthode de fabrication d'un tel emballage

(43) Veröffentlichungstag der Anmeldung: 24.11.2004
(73) Patentinhaber: Gundlach Berlin Display & Verpackung GmbH, 12277 Berlin (DE)
(72) Erfinder: Ulrich, Peter, 14197 Berlin (DE)
(74) Vertreter: Hannig, Wolf-Dieter, Dipl.-Ing.

(56) Entgegenhaltungen:
- EP-A- 1 045 395
- DE-A- 3 820 239
- US-A- 4 770 474
- US-A- 5 385 231
- US-A- 6 079 557
- US-A1- 2002 046 959
- US-B1- 6 318 550

## Beschreibung

Die Erfindung betrifft eine Verpackung für einen scheibenförmigen Aufzeichnungsträger, beispielsweise DVD/CD-Speichermediun, mit einem den Aufzeichnungsträger haltenden kastenförmigen Formkörper aus Kunststoff und mit einer aus einer Abdecklage und Rückenlage gebildeten Umhüllung, die aus einem gefalteten Zuschnitt aus Karton, Pappe, Vlies, Kunststoff oder dgl. besteht und welche einen an zwei aneinandergrenzenden äußeren Rändern offenen Aufnahmeraum aufweist, in dem der Formkörper um einen zwischen der Abdecklage und Rückenlage im Eckbereich der offenen Ränder feststehend positionierten Zapfen in einem Zapfenloch des Formkörpers schwenkbar angeordnet ist, wobei der Formkörper an seiner dem Zapfen gegenüberliegenden Schmalseite mit einem Anschnitt versehen ist, der diagonal zum Zapfen nach innen verlaufend angeordnet ist.

Die Erfindung betrifft ferner ein Verfahren zum Konfektionieren einer Verpackung für einen scheibenförmigen Aufzeichnungsträger, beispielsweise DVD-Speichermediun, bei dem aus Karton, Pappe, Vlies, Kunststoff oder dgl. ein gefalteter Zuschnitt für eine aus einer Abdecklage und Rückenlage gebildeten Umhüllung hergestellt, ein kastenförmiger Formkörper aus Kunststoff erzeugt und der Formkörper um einen zwischen der inneren Abdecklage und der Rückenlage im Eckbereich der offenen Ränder feststehend positionierten Zapfen in einem Zapfenloch des Formkörpers schwenkbar eingeklebt wird.

Es ist bekannt, digitale Speichermedien wie DVD in buchformatähnlichen Kassetten aus Kunststoff zu verpacken, die aus einem flachen kastenförmigen Bodenteil und einem das Bodenteil rastend verschließenden, abnehmbaren oder aufklappbaren Deckelteil gebildet ist. Der Bodenteil ist als ein Formteil mit einer kreisförmigen Erhebung oder einer Vertiefung versehen, innerhalb der ein aus Nasen bestehendes, in das Loch des Speichermediums klemmend eingreifendes Haltemittel angeformt ist.
Diese bekannte Verpackung erfordert einen relativ großen Material- und Herstellungsaufwand und ist durch die Verwendung von hochwertigem Kunststoff für den Kassettenteil auch sehr kostenintensiv.
Ein weiterer Nachteil dieser bekannten Verpackung besteht darin, dass zum Entnehmen des Speichermediums mehrere Handgriffe wie das Lösen der Verrastung zwischen Deckel- und Bodenteil, das Aufklappen des Deckelteils und das Lösen des Speichermediums vom Haltemittel notwendig werden. Diese Schwierigkeiten bei der Handhabung der Verpackung führen sehr oft dazu, dass der Nutzer aus Gründen der Bequemlichkeit die Verpackung nicht mehr benutzt. Insbesondere bei zweilagig bespielten Speichermedien führt dies zur Beeinträchtigung der Wiedergabequalität der gespeicherten Informationen.

Aus der US 5 188 230 ist des weiteren eine für ein digitales Speichermedium geeignete buchähnliche Verpackung bekannt, die ein kastenförmiges Formteil aus Polypropylen umfasst, in dessen Bodenteil eine kreisrunde Vertiefung für die Aufnahme des Speichermediums eingeformt ist. In der Vertiefung ist das Speichermedium durch ein zentrisch angeordnetes Haltemittel klemmend fixiert. Die Vertiefung ist an ihrem Rand mit Ausnehmungen zum Greifen des Speichermediums versehen. Das Formteil besitzt gegenüber der Vertiefung und dem Haltemittel hochgezogene Längs- und Querwände, die einen Innenraum umgrenzen. An ihrem dem Bodenteil zugewandten Rand der Querwände ist ein Filmscharnierband angeformt, das in Richtung Bodenteil klappbar und mit längs des Bandes angeordneten gleichmäßig voneinander beabstandeten Haltenasen versehen ist. Ein in Deckelteile und ein Rückenteil durch Falzen geteilter Zuschnitt aus Karton bildet gewissermaßen die Einbanddecke für das das Speichermedium aufnehmende kastenförmige Formteil. Entlang der Querseiten des dem Bodenteil des Formteiles zugeordneten Deckels sind entsprechend des Abstandes der Haltenasen am Filmscharnierband Ausschnitte eingebracht, in die die Haltenasen beim Umlegen des Filmscharnierbandes in Richtung Bodenteil eingreifen. Der hintere Deckel des Zuschnitts liegt somit am Bodenteil des Formteiles fest. Der vordere Deckel ist um den entlang der Längswand anliegenden Rückenteil in Richtung auf die dem Rückenteil gegenüberliegende Längswand klappbar und liegt auf einem an die Quer- und Längswände innenseitig angeformten Rand auf. An ihrem dem Bodenteil zugewandten Rand der Längswand, die dem Rückenteil gegenüber liegt, ist ein vom Bodenteil weg klappbares Filmscharnierband in Winkelform angeformt. Der senkrecht aufragende Schenkel des Filmscharnierbandes besitzt innenseitig zwei Nasen, die beim Umlegen des Filmscharnierbandes in Richtung des Längswand diese rastend hintergreifen. Der vordere Deckel ist auf dem Formteil geschlossen. Geöffnet wird die Verpackung durch Lösen der Verrastung des Schenkels des Filmscharnierbandes von der Längswand. Der Deckel wird zurückgeklappt und das Speichermedium ist entnehmbar.

Des weiteren ist aus der DE 38 20 239 A1, die die einleitenden Teile der unabhängigen Ansprüche 1 und 17 widerspiegelt, eine Verpackung für scheibenförmige Produkte, beispielsweise Schallplatten, Disketten, Kompaktdisketten o. dgl. bekannt. Diese Verpackung weist zwischen zwei im Abstand voneinander parallel angeordneten ebenen und im Randbereich miteinander verbundenen Scheiben einen scheibenförmigen Produktträger auf, der mit den Scheiben zwischen einer das Produkt durch die Scheiben völlig verdeckenden und einer das Produkt durch die Scheiben völlig freigebenden Stellung verschwenkbar ist. Ähnliche Lösungen offenbaren die DE 298 00 899 U1, GB 2 276 609 A, US 5 425 451 A, WO 98/04478A1, US 6 318 550 B1, EP 1 045 395 A2 und US 4770 474 A, in denen der die CD tragende schuberförmige Formkörper schwenkbar mit der Hülle verbunden ist.

Alle diese bekannten Verpackungen müssen aus einem sehr hochwertigen Kunststoff gefertigt sein, weil einerseits das oftmalige Öffnen und Schließen des Deckels kein Abreißen der Filmscharniere durch Ermüdung erlaubt, und andererseits sehr enge Fertigungstoleranzen erforderlich sind, um die entsprechenden Rastmechanismen zu gewährleisten.
Der Aufwand steigt durch zusätzlich anzubringende Garantieverschlüsse an den Verpackungen.

Aus der US 6 079 557 A, US 5 385 231 A und US 2002/0046959A1 sind Sollbruchstellen bei Verpackungsbehältnissen bekannt, die beim ersten Öffnen der Verpackung den Bruch eines Einrastteiles bewirken.

Bei diesem Stand der Technik liegt der Erfindung die Aufgabe zugrunde, unter Beibehaltung einer einfachen, zuverlässigen und nutzerfreundlichen Handhabbarkeit der Verpackung den Anteil an hochwertigem Kunststoff zu reduzieren, die Herstellung kostengünstiger und zugleich mit Einbeziehung eines Garantieverschlusses sicherer zu gestalten.

Diese Aufgabe wird erfindungsgemäß durch die Merkmale im kennzeichnenden Teil des Hauptanspruches der Verpackung und den kennzeichnenden Merkmalen des Verfahrensanspruches gelöst. Zweckmäßige Ausgestaltungen der Erfindung sind in den Unteransprüchen beschrieben.

Die erfindungsgemäße Verpackung besteht im wesentlichen aus einem spritzgegossenen Formkörper aus Kunststoff, der gegen einen hinteren und vorderen Anschlag um einen nahe der Ecke zwischen Schmal- und Längsseite gelegenen Zapfen verschenkbar ist. Von besonderem Vorteil ist, dass der hintere Anschlag durch ein Anschlagteil gebildet wird, welches über eine Sollbruchlinie mit dem Formkörper verbunden ist.

Durch die Integration der Sollbruchlinie in das Innere der Verpackung entsteht ein Garantieverschluss, dessen Herstellung kostengünstig im vorgelagerten Spritzprozess möglich ist. Die Sollbruchlinie kann sehr einfach durch ein leichtes Knicken des Anschlagteiles an der dem Zapfen gegenüberliegenden Ecke erreicht werden.
Sowohl der Zapfen als auch das Anschlussteil ist als Hohlteil ausgebildet und besitzt Klebflächen mit einer Oberflächenstruktur, die ein bevorzugtes Haften des Klebstoffes ermöglicht.
Der Zapfen ist stoffschlüssig am Formkörper angespritzt, so dass der Zapfen in das Zapfenloch bei der nachfolgenden Konfektionierung eingedrückt werden kann.
Das hintere Anschlagteil und der Zapfen wird beim Klebeprozess zwischen einer inneren Abdecklage und einer Rückenlage fest eingeklebt. Der hintere Anschlag vermeidet, dass die den Zapfen haltende Klebverbindung überbeansprucht wird. Mit dem vorderen Anschlag, der sich gegen die innere Abdecklage und die Rückenlage abstützt, wird ein einfaches Herausschwenken des Formkörpers aus dem Aufnahmeraum zwischen innerer Abdecklage und Rückenteil ermöglicht.

Das durch Spritzguss hergestellte Formteil kann auch aus recyceltem Kunststoff gefertigt sein, da keine Scharnier- und Rastverbindungen vorhanden sind.
Besonders vorteilhaft ist es, dass die Umhüllung des Formteiles aus Kartonmaterial besteht, das sich kostengünstig mit für Verpackungsmaterialien geeignete Vorrichtungen herstellen und bedrucken lässt.
Durch das Herausschwenken des Formkörpers aus dem von der Umhüllung gebildeten Aufnahmeraum ist eine einfache Entnahme des Speichermediums aus dem Formkörper möglich, ohne dass zusätzliche Handgriffe wie das Lösen des Deckels oder anderen Rastverschlüssen notwendig sind. Ebenso unkompliziert ist das Einlegen des Speichermediums in den Aufnahmeraum. Der Formkörper wird nur in den Aufnahmeraum eingeschwenkt und ist somit sicher untergebracht.
Die erfindungsgemäße Verpackung eignet sich auch dazu, doppelseitig bespielte Speicherträger aufzunehmen. Hierzu bedarf es nur den Aufnahmeraum an der Oberseite und Unterseite des Formkörpers entsprechend unterzubringen. Des weiteren hat die erfindungsgemäße Verpackung den Vorteil, dass mehrere Aufnahmeräume, beispielsweise ein erster Raum am Deckel und ein zweiter Raum am Bodenteil, zur schwenkbaren Aufnahme von Formteilen vorgesehen werden können.
Alle Deckel- und Bodenflächen des Zuschnitts lassen sich bedrucken, so dass vielfältige Design- und Gestaltungsmöglichkeiten vorhanden sind.

Die Erfindung soll nachstehend an einem Ausführungsbeispiel an Hand der Zeichnungen näher erläutert werden.

Es zeigen:
- Fig. 1: eine perspektivische Ansicht der erfindungsgemäßen Verpackung mit einem teilweise herausgeschwenkten Formkörper,
- Fig. 2: eine perspektivische Ansicht des Formkörpers mit angesetztem hinteren Anschlagstück und angespritztem Zapfen,
- Fig. 3: einen Schnitt durch die Sollbruchlinie zwischen Formkörper und Anschlagstück entlang der Linie A-A in Fig. 2,
- Fig. 4: einen Schnitt entlang der Linie B-B in Fig. 2,
- Fig. 5: eine Einzelheit X in Fig. 4 und

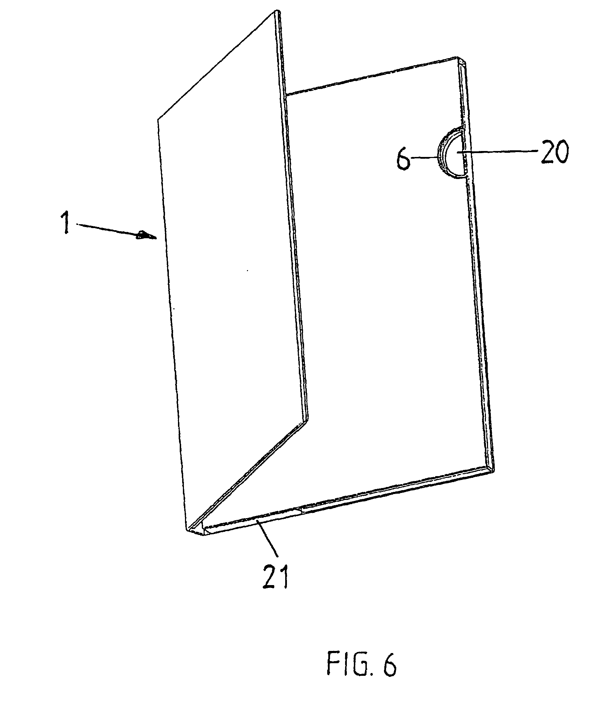

- Fig. 6: eine perspektivische Ansicht der erfindungsgemäßen Verpackung mit eingeschobenem Formkörper.

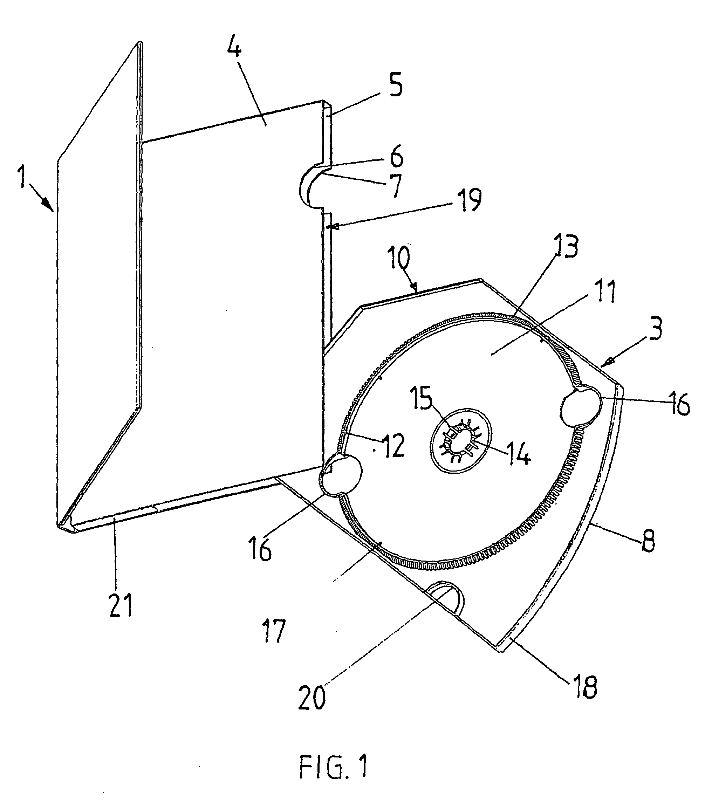

Die erfindungsgemäße Verpackung für einen DVD-Aufzeichnungsträger besteht, wie Fig. 1 zeigt, im wesentlichen aus einer Umhüllung **1** aus Karton und einem in der Umhüllung um einen Zapfen **2** schwenkbar befestigten Formkörper **3** aus spritzgegossenem Kunststoff.
Die Umhüllung **1** mit Abdecklage **4** und Rückenlage **5** wird bekanntlich aus einem mehrere Flächen umfassenden Zuschnitt hergestellt, auf deren nähere Beschreibung deshalb verzichtet werden kann.
Die Abdecklage **4** und die Rückenlage **5** haben an ihren vorderen Längsseiten **L**_{**V**} jeweils zueinander korrespondierende Ausschnitte **6** und **7** zum Greifen des Formkörpers **3**.

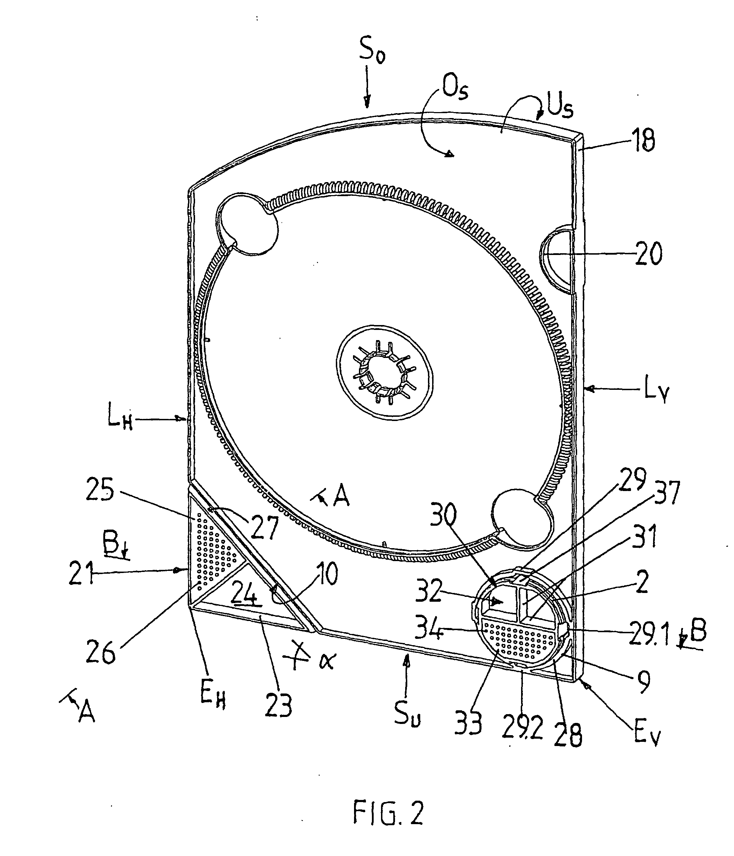

Fig. 2 stellt den schubladenartigen Formkörper **3** dar. Die obere Schmalseite **S**_{**O**} des Formkörpers **3** besitzt einen Anschnitt **8**, der in Richtung der diagonal gegenüberliegenden Ecke vom Zapfenloch **9** nach innen verläuft.
Das Zapfenloch **9** ist nahe der unteren Schmalseite **S**_{**U**} und der vorderen Längsseite L_{V} des Formkörpers **3** in der vorderen unteren Ecke **E**_{**V**} eingebracht. Am Zapfenloch **9** wird der Zapfen **2** durch eine stoffschlüssige Verbindung temporär gehalten, die später im Einzelnen beschrieben wird.
Zwischen der hinteren Längsseite **L**_{**H**} und der unteren horizontalen Schmalseite **S**_{**U**} des Formkörpers **3** ist eine hintere Anschlagfläche **10** ausgebildet, die gegenüber der hinteren Längsseite **L**_{**H**} und der unteren Schmalseite **S**_{**U**} einen Winkel α von 45° einschließt.
Es entsteht dadurch ein fünfeckiger Formkörper **3**, dessen Längs- und Schmalseiten **L** und **S** alle unterschiedliche Längen aufweisen. Der Formkörper **3** besitzt auf seiner Oberseite **O**_{**S**} und/oder Unterseite **U**_{**S**} eine Aufnahme **11** für die Ablage eines nicht dargestellten Aufzeichnungsträgers. Die Aufnahme **11** hat einen kreisförmigen Rand **12**, der durch einen außenseitig zum Rand **12** zahnkranzartig geformten Steg **13** verstärkt ist. Zentrisch in der Aufnahme **11** befinden sich sternförmig angeordnete Füllguthalter **14** mit Haltevorsprüngen **15** zum Halten des Aufzeichnungsträgers. Mittels zweier diagonal gegenüberliegender Durchgriffsöffnungen **16**, die den Rand **12** und Steg **13** unterbrechen, ist es möglich, den Aufzeichnungsträger vom Füllguthalter **14** zu lösen, zu entnehmen oder wieder einzulegen.
Nahe des Randes **12** sind innerhalb der Aufnahme **11** an vier gegenüberliegenden Stellen punktförmige Erhebungen **17** an die Oberseite **O**_{**S**} bzw. Unterseite **U**_{**S**} des Formkörpers **3** angeformt, die eine punktförmige Auflage des Aufzeichnungsträgers gewährleisten.
Der Formkörper **3** ist randseitig von einem an den Längs- und Schmalseiten senkrecht aufragenden Steg **18** umgrenzt. Die Höhe dieses Steges **18** entspricht der Höhe des Aufnahmeraumes **19** der Umhüllung **1**.

Den Ausschnitten **6** und **7** in der inneren Abdecklage **4** und Rückenlage **5** zugeordnet ist ein sich in die Ausschnitte **6** und **7** erstreckendes Greifteil **20** zum Heraus- und Hineinschwenken des Formkörpers **3** in den Aufnahmeraum **19** der Umhüllung 1 innenseitig am Steg **18** angeformt. Dieses Greifteil **20** kann vollflächig oder strukturiert ausgebildet sein und eine Höhe haben, die der äußeren Höhe der Umhüllung entspricht, so dass es einen vorderen Anschlag für den Formkörper **3** bildet.

Der vorderen unteren Ecke **E**_{**V**} gegenüber liegt die hintere Anschlagfläche **10**, die mit einem Anschlagstück **21** über eine Sollbruchlinie **22** verbunden ist. Das Anschlagstück **21** ist als ein polyedrischer Körper **23** geformt, der die hintere untere Ecke **E**_{**H**} des Formkörpers **3** bildet und dessen Höhe der Höhe des Stegs **18** entspricht.

In diesem Beispiel besteht der Körper **23** aus mäanderartig aneinandergrenzenden dreieckförmigen napfartigen Teilen **24**, deren Bodenflächen **25** mit einer Profilierung, beispielsweise kleinen Nocken **26**, versehen sind. Die der unteren hinteren Ecke **E**_{**H**} gegenüberliegende lange Seite des Körpers **23** bildet eine Anschlagfläche **27**, die in Lage, Winkelstellung und Abmessung der Anschlagfläche **10** des Formkörpers 3 entspricht.

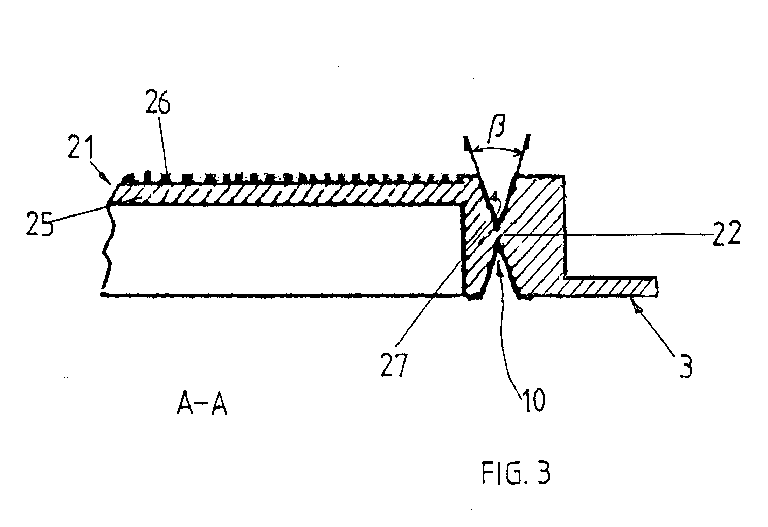

Fig. 3 zeigt einen Schnitt durch die Sollbruchlinie **22**, die etwa mittig an den Anschlagflächen **27** des Anschlagstücks **21** und der Anschlagfläche **10** des Formkörpers 3 verläuft. Die Sollbruchlinie **22** hat eine X-Form, deren Öffnungswinkel β etwa 30° beträgt.
Bei der Konfektionierung der erfindungsgemäßen Verpackung werden die Bodenflächen **25** des Anschlagstücks **21** mit der inneren Abdecklage **4** und der Rückenlage **5** verklebt. Das Anschlagstück **27** bildet so die untere hintere Ecke **E**_{**H**} der Verpackung. Wird diese Ecke **E**_{**H**} entlang der Sollbruchlinie 22, d.h. entlang der Anschlagflächen **10** und **27** leicht auf Knick belastet, bricht die Sollbruchlinie **22** und trennt den Formkörper **3** vom festgelegten Anschlagstück **21** ab.

Wie in Fig. 2 dargestellt, besitzt das Zapfenloch **9** einen äußeren kreisförmigen Bund **28**, in dem diametral gegenüberliegend Aussparungen **29** eingeformt sind. Dabei stützt sich der Bund **28** mit denjenigen Aussparungen **29.1** und **29.2** an dem umlaufenden Steg **18** des Formkörpers **3** ab, die jeweils die vordere Längsseite **L**_{**V**} und die untere Schmalseite **S**_{**U**} begrenzen.
Der Zapfen **2** ist als ein kreiszylinderartiger Hohlkörper **30** geformt, der durch kreuzförmig im Hohlkörper **30** angeordnete Stege **31** in vier gleichgroße kreissegmentartige, gegeneinander abstützende Näpfe **32** eingeteilt sind. Jeweils zwei Näpfe **32** besitzen eine gemeinsame Bodenfläche **33**, deren äußere Fläche mit nutenförmigen Erhebungen **34** versehen ist, wobei die Bodenfläche **33** mäanderförmig verläuft, so dass die Bodenflächen **33** jeweils zweier Näpfe **32** eine obere und untere Klebfläche bilden.

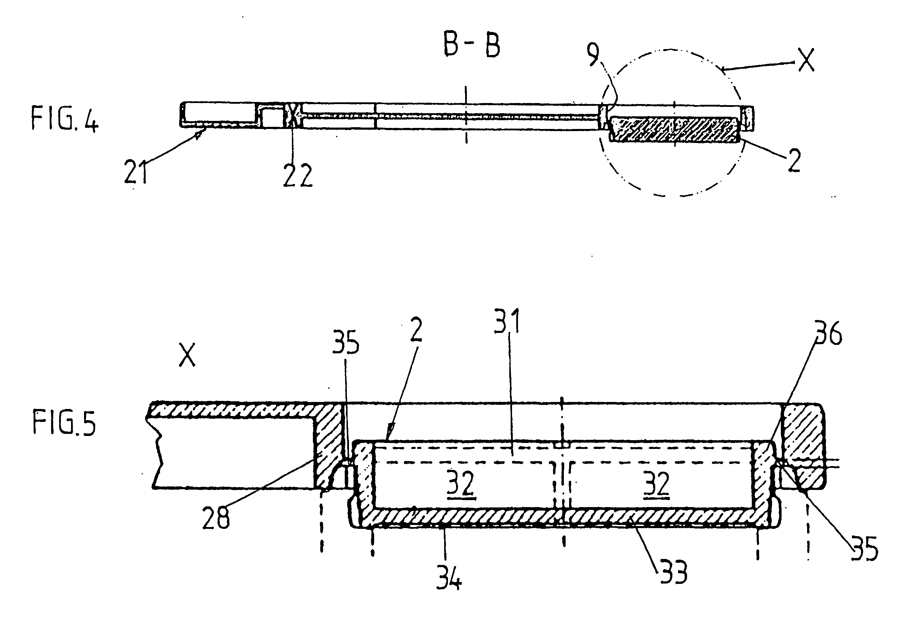

Fig. 4 und 5 macht deutlich, dass der Zapfen **2** nach dem Spritzvorgang mit dem Zapfenloch **9** durch eine streifenartige Verbindung **35** stoffschlüssig verbunden ist.
Der Zapfen **2** besitzt ebenfalls einen Bund **36**, der durch Aussparungen **37** unterbrochen ist. Der Bund **36** des Zapfens **2** hat einen Durchmesser, der gegenüber dem Durchmesser des Bundes **28** des Zapfenloches **9** geringfügig geringer ist. Die Aussparungen **29** des Zapfenloches **9** sind mit den Aussparungen **37** durch die Streifen **35** stoffschlüssig verbunden, so dass der Zapfen **2** eindrückbereit am Zapfenloch **9** bereits vor der Konfektionierung festgelegt ist.
Sobald die Verpackung konfektioniert wird, d. h. der Formkörper **3** mit der Abdecklage **4** und der Rückenlage **5** verbunden wird, wird der Zapfen **2** in das Zapfenloch **9** eingedrückt. Durch das Eindrücken reißt die stoffschlüssige Verbindung **35** zwischen dem Zapfen **2** und dem Zapfenloch **9** und der Zapfen **2** kann mit seinen jeweiligen Bodenflächen **33** an der inneren Abdecklage **4** und der Rückenlage **5** durch Klebung fixiert werden. Der Formkörper **3** ist damit um den Zapfen **2** schwenkbar, sofern die Sollbruchlinie **22** durch entsprechende Knickung aufgebrochen wurde.
Soll die Sollbruchlinie **22** als Garantieverschluss eingesetzt werden, wird der Aufzeichnungsträger in den Formkörper **3** eingelegt und die Verpackung anschließend konfektioniert. Der Nutzer des Aufzeichnungsträgers muss dann, wie beschrieben, die Sollbruchlinie **22** durch eine leichte Knickung entlang der Sollbruchlinie lösen.
Die erfindungsgemäße Verpackung ermöglicht somit einen exakten kontrollierten Zugriff zum Inhalt der Verpackung.

### Aufstellung der verwendeten Bezugszeichen

- Umhüllung: 1
- Zapfen: 2
- Formkörper: 3
- Innere Abdecklage: 4
- Rückenlage: 5
- Ausschnitte in Lᵥ: 6, 7
- Anschnitt: 8
- Zapfenloch: 9
- Hintere Anschlagfläche: 10
- Aufnahme: 11
- Kreisförmiger Rand von 11: 12
- Zahnkranzartiger Steg von 12: 13
- Füllguthalter: 14
- Haltevorsprünge: 15
- Durchgriffsöffnung: 16
- Punktförmige Erhebungen: 17
- Steg von 3: 18
- Aufnahmeraum in 1: 19
- Griffteil: 20
- Anschlagstück: 21
- Sollbruchlinie: 22
- Polyedrischer Körper: 23
- Napfförmige Teile: 24
- Bodenfläche von 21: 25
- Nocken an 25: 26
- Anschlagfläche von 21: 27
- Bund von 9: 28
- Aussparungen von 28: 29,29.1,29.2
- Hohlkörper von 2: 30
- Stege von 30: 31
- Näpfe von 30: 32
- Bodenfläche von 32: 33
- Nutenförmige Erhebungen: 34
- Stoffschlüssige Streifen: 35
- Bund von 2: 36
- Aussparungen in 2: 37
- Vordere untere Ecke: E_{V}
- Hintere untere Ecke: E_{H}
- Längsseiten: L
- Schmalseiten: S
- Vordere Längsseite: L_{V}
- Hintere Längsseite: L_{H}
- Obere Schmalseite: S_{O}
- Untere Schmalseite: S_{U}
- Oberseite von 3: O_{S}
- Unterseite von 3: U_{S}
- Winkel: α
- Öffnungswinkel an 22: β

## Patentansprüche

1. Verpackung für einen scheibenförmigen Aufzeichnungsträger, beispielsweise DVD/CD-Speichermedium, mit einem den Aufzeichnungsträger haltenden kastenförmigen Formkörper aus Kunststoff und mit einer aus einer Abdecklage und Rückenlage gebildeten Umhüllung, die aus einem gefalteten Zuschnitt aus Karton, Pappe, Vlies, Kunststoff oder dgl. besteht und welche einen durch eine innere Abdecklage und einem Rückenteil umgrenzten, mindestens an zwei aneinandergrenzenden äußeren Rändern offenen Aufnahmeraum aufweist, in dem der Formkörper um einen zwischen der Abdecklage und Rückenlage im Eckbereich der offenen Ränder feststehend positionierten Zapfen in einem Zapfenloch des Formkörpers schwenkbar angeordnet ist, wobei der Formkörper an seiner dem Zapfen gegenüberliegenden Schmalseite mit einem Anschnitt versehen ist, der diagonal zum Zapfen nach innen verlaufend angeordnet ist, **gekennzeichnet durch** folgende Merkmale:
a) dem Formkörper **(3)** ist ein **durch** Klebverbindung von der Abdecklage **(4)** und Rückenlage **(5)** im zum Zapfen **(2)** gegenüberliegenden Eckbereich **(E**_{**H**}**)** gehaltenes, inneres Anschlagstück **(21)** mit einer Anschlagfläche **(27)** zugeordnet, welches mit einer korrespondierenden Anschlagfläche **(10)** des Formkörpers **(3) durch** eine Sollbruchlinie **(22)** stoffschlüssig verbunden ist,
b) der Formkörper **(3)** hat an seinem der Einschuböffnung zugeordneten Längsseiten ein Greifteil **(20),** das im eingeschobenen Zustand in entsprechende Ausschnitte **(6;7)** von Abdecklage **(4)** und Rückenlage **(5)** als vorderer Anschlag eingreift,
c) der Zapfen **(2)** ist als ein zylinderartiger flacher Hohlkörper (**30**) ausgebildet, der aneinandergrenzende, **durch** Versteifungsstege **(31)** gebildete Näpfe **(32)** aufweist, deren äußere Bodenfläche **(33)** mäanderartig angeordnet und mit einer Profilierung **(34)** zur Haftung des Klebstoffes versehen ist.

2. Verpackung nach Anspruch 1, **dadurch gekennzeichnet, dass** die Sollbruchlinie **(22)** zwischen der Anschlagfläche **(27)** des Anschlagstücks **(21)** und der Anschlagfläche **(10)** des Formkörpers **(3)** einen sich durch Knickung öffnenden Garantieverschluss bildet.

3. Verpackung nach Anspruch 1 bis 4, **dadurch gekennzeichnet, dass** die Sollbruchlinie **(22)** zwischen den Anschlagflächen **(27;10)** etwa mittig an den Flächen liegt, eine x-Form und einen beidseitigen Öffnungswinkel (β) von etwa 30° aufweist.

4. Verpackung nach Anspruch 1, **dadurch gekennzeichnet, dass** der Formkörper **(3)** durch einen randseitig senkrecht aufragenden, umlaufenden Steg (**18**) begrenzt ist.

5. Verpackung nach Anspruch 4, **dadurch gekennzeichnet, dass** der Steg **(18)** die Oberseite **(O**_{**S**}**)** und/oder Unterseite **(U**_{**S**}**)** des Formkörpers **(3)** umgrenzt.

6. Verpackung nach Anspruch 1 und 2, **dadurch gekennzeichnet, dass** das Anschlagstück **(21)** als polyedrischer Körper **(23)** ausgebildet ist, an dessen langer der der unteren Ecke **(E**_{**H**}**)** des Formkörpers **(3)** gegenüberliegenden Fläche die Sollbruchlinie **(22)** angeordnet ist und der sich aus alternierend aneinandergrenzenden, napfförmige Teilen **(24)** zusammensetzt, deren äußere Bodenflächen **(25)** mit einer Profilierung **(26)** zur Haftung des Klebstoffes versehen sind.

7. Verpackung nach Anspruch 6, **dadurch gekennzeichnet, dass** die Profilierung **(26)** aus nockenförmigen Erhebungen, Nuten oder Stegen gebildet ist.

8. Verpackung nach Anspruch 1 und 2, **dadurch gekennzeichnet, dass** die Anschlagfläche **(27)** des Anschlagstückes **(21)** und die korrespondierende Anschlagfläche **(10)** des Formkörpers **(3)** einen Winkel (α) von 40 bis 50°, vorzugsweise 45°, gegenüber der Längs- und Schmalseite **(L**_{**H**}**;S**_{**U**}**)** des Formkörpers **(3)** einschließen.

9. Verpackung nach Anspruch 1 bis 8, **dadurch gekennzeichnet, dass** die Höhe des polyedrischen Körpers **(23)** des Anschlagstücks **(21)** der Höhe des Steges **(18)** des Formkörpers **(3)** entspricht.

10. Verpackung nach Anspruch 1, **dadurch gekennzeichnet, dass** der Hohlkörper **(30)** des Zapfens **(2)** einen kragenförmigen Bund **(36)** aufweist, dessen äußerer Durchmesser geringfügig geringer als der Durchmesser des Zapfenloches **(9)** ist, und in dem Aussparungen **(37)** vorgesehen sind, und dass das Zapfenloch **(9)** einen Bund **(28)** mit inneren Aussparungen **(29)** besitzt, an denen Streifen **(35)** stoffschlüssig angegossen sind, die mit den Aussparungen **(37)** des Zapfens **(2)** stoffschlüssig so verbunden sind, dass der Zapfen **(2)** mit seiner äußeren Bodenfläche **(33)** aus der Ebene des Formkörpers (**3**) hinausragt, wobei beim Verkleben der Bodenflächen **(33)** mit der Abdecklage **(4)** und der Rückenlage **(5)** der Zapfen **(2)** unter Bruch der Streifen **(35)** vom Zapfenloch **(9)** aufnehmbar ist.

11. Verpackung nach Anspruch 1, **dadurch gekennzeichnet, dass** der Formkörper **(3)** auf der Oberseite und/oder Unterseite mit einer Aufnahme **(11)** zum Einlegen eines Aufzeichnungsträgers versehen ist.

12. Verpackung nach Anspruch 11 **dadurch gekennzeichnet, dass** die Aufnahme **(11)** von einem außenseitig zahnkranzartig ausgebildeten, durch einen kreisförmig umlaufenden Steg **(13)** gebildeten Rand **(12)** begrenzt ist.

13. Verpackung nach Anspruch 1, 11 und 12, **dadurch gekennzeichnet, dass** der Rand **(12)** der Aufnahme **(11)** von den Formkörper **(3)** durchsetzenden Durchgriffsöffnungen **(16)** zum Erfassen und zur Entnahme des Aufzeichnungsträgers aus der Aufnahme durchbrochen ist, die in diagonaler Richtung zum Zapfen **(2)** gegenüberliegend angeordnet sind.

14. Verpackung nach Anspruch 1 bis 13, **dadurch gekennzeichnet, dass** nahe am Rand **(12)** innerhalb der Aufnahme **(11)** mindestens vier, sich diagonal gegenüberliegende punktförmige Auflageerhebungen **(17)** für den Schutz des Aufzeichnungsträgers angeordnet sind.

15. Verpackung nach Anspruch 1 bis 14, **dadurch gekennzeichnet, dass** die Aufnahme **(11)** eine aus sternförmig angeordneten Füllguthaltern **(14)** mit mindestens drei, die Füllguthalter geringfügig überragenden zugeordneten Haltevorsprüngen **(15)** aufweist.

16. Verpackung nach Anspruch 1 bis 15, **dadurch gekennzeichnet, dass** das Greifteil **(20)** mit einer halbkreisförmigen Vertiefung zwecks Ergreifen des Formteils zum Herausschwenken des Formkörpers aus dem Aufnahmeraum **(19)** versehen ist, wobei das Greifteil eine Höhe aufweist, die die Höhe des Steges **(18)** des Formkörpers **(3)** geringfügig übersteigt und einen Anschlag an der Abdecklage **(4)** und der Rückenlage **(5)** ermöglicht.

17. Verfahren zum Konfektionieren einer Verpackung nach Anspruch 1, bei dem aus Karton, Pappe, Vlies, Kunststoff oder dgl. ein gefalteter Zuschnitt für eine aus vorderen und hinteren Deckeln und einer die Deckel verbindenden Rückenlage gebildeten Umhüllung hergestellt, ein schuberförmiger Formkörper aus Kunststoff erzeugt und der Formkörper um einen zwischen den Deckeln und einer inneren Abdecklage im Eckbereich der offenen Ränder feststehend positionierten Zapfen in einem Zapfenloch des Formkörpers schwenkbar eingeklebt wird, **gekennzeichnet durch** folgende Schritte,
a) im Formkörper wird eine von Abdecklage und Rückenlage verdeckte Sollbruchlinie **(22)** erzeugt, die den Formkörper bei nachfolgender leichter Knickung der vollständig konfektionierten Verpackung in einen Anschlagstück und eine Anschlagfläche teilt und
b) Zapfen **(2)** und Zapfenloch **(9)** werden **durch** eine stoffschlüssige Verbindung montagegerecht miteinander verbunden, die beim nachfolgendem Klebeprozess des Konfektionierens mittels Druckanwendung **durch** Eindrücken des Zapfens in das Zapfenloch des Formkörpers gelöst wird.

18. Verfahren nach Anspruch 17, **dadurch gekennzeichnet, dass** die Knickung des Formkörpers vor oder nach Einlegen des Aufzeichnungsträgers in die Verpackung durchgeführt wird.

19. Verfahren nach Anspruch 17 und 18, **dadurch gekennzeichnet, dass** der Klebeprozess vor oder nach Einlegen des Aufzeichnungsträgers in die Verpackung durchgeführt wird.

20. Verfahren nach Anspruch 17 bis 19, dass durch Einlegen des Aufzeichnungsträgers in die Aufnahme des Formkörpers vor Durchführung der Klebung die mit Schritt a) hergestellte Sollbruchlinie einen Garantieverschluss für die Verpackung erzeugt.

## Claims

1. Case for a discoidal recording medium, for example DVD/CD storage medium, with a plastic box-shaped moulded padding that holds the recording medium and an envelope comprising a covering layer and a backing layer composed of a folded pre-cut part of cardboard, paperboard, non-woven fabric, plastic or similar, said envelope has a plug-in cavity that is defined by an inner covering layer and a back part and is open along at least two abutting outer edges, and said padding is swivel-mounted in this cavity by means of a pivot that is fixed in the corner area of the open edges between the covering layer and backing layer and that fits into a pivot hole in the padding, which has a bevel cut along the small side of the padding opposite to the pivot and disposed inwardly to the pivot characterise by following features:
a) a inner limiting stop **(21)** with a stop face **(27)** is associated to the padding, said stop **(21)** is adhesively fixed between the covering layer **(4)** and the backing layer **(5)** in the corner area **(E**_{**H**}**)** opposite the pivot **(2)** and is joined by a solid connection to a corresponding stop face **(10)** of the padding **(3)** along a predetermined breaking line **(22);**
b) the padding **(3)** has a grip **(20)** associated to the long side of the plug-in cavity of the padding, said grip is engaged in corresponding cut-outs **(6,7)** in the covering layer **(4)** and backing layer **(5)** as a front stop when the grip is pushed in;
c) the pivot is formed as a flat cylindrical hollow body **(30)** having cups **(32)** border on each other formed by strengthening bars **(31),** and whose outer bottom area **(33)** of the cups is arranged with a meandering pattern and is provided with a profile **(34)** for adhesiveness of the glue.

2. Case according to claim 1, **characterised in that** the predetermined breaking line **(22)** between the stop face **(27)** of the limiting stop **(21)** and the stop face **(10)** of the padding **(3)** forms a guarantee-closure that opens when it is bent.

3. Case according to claims 1 to 4, **characterised in that** the predetermined breaking line **(22)** between the stop faces **(27; 10)** lies roughly at the centre of the faces and forms an X shape with an apex angle (β) on both sides of approximately 30°.

4. Case according to claim 1, **characterised in that** a perpendicular raised rim **(18)** runs around the outer edge of the padding **(3).**

5. Case according to claim 4, **characterised in that** the rim **(18)** runs around the top side **(O**_{**s**}**)** and/or the bottom side **(U**_{**s**}**)** of the padding **(3).**

6. Case according to claims 1 and 2, **characterised in that** the limiting stop **(21)** is a polyhedral-shaped part **(23)** whose face running opposite the lower corner **(E**_{**H**}**)** of the padding **(3)** accommodates the predetermined breaking line **(22)** and which is composed of alternating, adjoining cupped sections **(24),** whose outer bottom surfaces **(25)** are provided with a profile **(26)** for adhesiveness of the glue.

7. Case according to claim 6, **characterised in that** the profile **(26)** is formed by cam-shaped elevations, grooves or rips.

8. Case according to claims 1 and 2, **characterised in that** the stop face **(27)** of the limiting stop **(21)** and the corresponding stop face **(10)** of the padding **(3)** form an angle
(α) of 40 to 50°, preferably 45°, opposite the long and short sides **(L**_{**H**}**; S**_{**U**}**)** of the padding **(3).**

9. Case according to claims 1 to 8, **characterised in that** the height of the polyhedral body **(23)** of the limiting stop **(21)** corresponds to the height of the rim **(18)** of the padding **(3).**

10. Case according to claim 1, **characterised in that** the hollow part **(30)** of the pivot **(2)** has a collar-shaped shoulder **(36)** whose outer diameter is slightly less than the diameter of the pivot hole **(9)** and into which recesses **(37)** are provided, and also **characterised in that** the pivot hole **(9)** has a shoulder **(28)** having recesses **(29)** on the inside onto which strips **(35)** are cast-on that are joined by a solid connection to the recesses **(37)** of the pivots **(2)** in such a way that the outer bottom area **(33)** of the pivots **(2)** protrudes over the level of the padding **(3),** so that when the bottom area **(33)** is glued to the covering layer **(4)** and the backing layer **(5),** the pivot **(2)** can be permitted in the pivot hole **(9)** by breaking the strips **(35).**

11. Case according to claim 1, **characterised in that** the top and bottom sides of the padding **(3)** has a reception **(11)** into which a recording medium can be inserted.

12. Case according to claim 11, **characterised in that** the reception **(11)** is circulating bounded by a border **(12)** with outer gear-like rim formed by a circular web **(13).**

13. Case according to claims 1, 11 and 12, **characterised in that** the border **(12)** of the reception **(11)** is broken by openings **(16)** in the padding **(3)** for gripping and removing of the recording medium from the reception, whereby the openings are arranged opposite each other along an axis running diagonally to the pivot **(2).**

14. Case according to claims 1 to 13, **characterised in that** at least four diagonally opposed raised supports **(17)** to protect the recording medium are arranged near to the edge of the border **(12)** inside the reception **(11).**

15. Case according to claims 1 to 14, **characterised in that** the reception **(11)** shows an arrangement of star-shaped filling holders **(14)** with at least three retaining edges **(15)** that protrude slightly above the contents holders.

16. Case according to claims 1 to 15, **characterised in that** the grip **(20)** has a semicircular recess for griping and swivelling out the padding from the cavity **(19),** said grip has a height, which is slightly wider than the rim **(18)** of the padding **(3),** and which allows the grip to act as a stop against the covering layer **(4)** and the backing layer **(5).**

17. Method for assembly of a case according to claim 1, in which a folded pre-cut part made of cardboard, paperboard, non-woven fabric, plastic or similar is made for a envelope comprising a front and back covers and a backing layer connecting the two covers, a plastic padding in the shape of a slip case is created and the padding is glued in by means of a pivot that is mounted in a fixed position between the covers and an inner covering layer in the corner area of the open sides,
wherein the pivot fits into a pivot hole in the padding and allows the padding to swivel, **characterised by** following steps:
a) a predetermined breaking line **(22)** concealed by the covering layer and backing layer is created in the padding, said braking line separates the padding into a limiting stop and a stop face by following light bending of the fully assembled case,
b) Pivot **(2)** and pivot hole **(9)** are ready-to-assemble joined together by a solid connection, which is broken by using of pressure to push the pivot into the pivot hole in the padding during the subsequent gluing process of the assembly.

18. Method according to claim 17, **characterised in that** the padding is bent before or after the recording medium is inserted into the case.

19. Method according to claims 17 and 18, **characterised in that** the gluing process is carried out either before or after the recording medium is inserted into the case.

20. Method according to claims 17 to 19, wherein as a result of the recording medium being inserted into the reception of the padding before the gluing process is carried out, the predetermined breaking line created in step a) forms a guarantee-closure for the case.

## Revendications

1. Emballage pour un support d'enregistrement en forme de disque, par exemple un médium d'enregistrement DVD/CD, avec un corps moulé en matière synthétique en forme de boîte retenant le support d'enregistrement, et une enveloppe constituée d'une couche de couverture et d'une couche arrière, qui est composée d'une pièce découpée pliée en papier fort, carton, fibres, matière synthétique ou équivalent, et qui présente un espace libre de logement délimité par une couverture intérieure et une partie arrière, ouvert au moins sur deux bords extérieurs attenants, dans lequel le corps moulé est agencé de manière pivotante dans une mortaise du corps moulé autour d'un tourillon fixe positionné entre la couche de couverture et la couche arrière dans la zone cornière des bords ouverts, le corps moulé possédant sur sa tranche opposée au tourillon une entaille placée en diagonale par rapport au tourillon et dirigée vers l'intérieur, **caractérisé par** les caractéristiques suivantes :
a) est affecté au corps moulé **(3)** une butée **(21)** intérieure maintenue dans la zone cornière **(E**_{**H**}**)** opposée au tourillon **(2)** par assemblage collé entre la couche de couverture **(4)** et la couche arrière **(5),** avec une surface de butée **(27)** qui est reliée à une surface de butée **(10)** correspondante du corps moulé **(3)** par une ligne de rupture **(22)** par adhérence de matériau,
b) le corps moulé **(3)** possède sur son grand côté affecté à l'ouverture d'insertion une pièce de préhension **(20)** qui s'engage en situation d'insertion dans des encoches correspondantes **(6;7)** de la couche de couverture **(4)** et de la couche arrière **(5)** comme butée avant,
c) le tourillon **(2)** est constitué comme corps creux plat cylindrique **(30),** qui présente de petits godets **(32)** contigus formés par des traverses de raidissement **(31)** et dont la surface de fond extérieure **(33)** est agencée en méandre et dotée d'un profilage **(34)** pour l'adhérence de la colle.

2. Emballage selon la revendication 1, **caractérisé en ce que** la ligne de rupture **(22)** entre la surface de butée **(27)** de la butée **(21)** et la surface de butée **(10)** du corps moulé **(3)** constitue une fermeture garantie s'ouvrant par pliure.

3. Emballage selon les revendications 1 à 4, **caractérisé en ce que** la ligne de rupture **(22)** entre les surfaces de butée **(27;10)** est à peu près centrée sur les surfaces, et présente une forme en x et un angle d'ouverture (β) des deux côtés d'environ 30°.

4. Emballage selon la revendication 1, **caractérisé en ce que** le corps moulé **(3)** est limité sur le bord par un listel **(18)** saillant vertical sur tout le pourtour.

5. Emballage selon la revendication 4, **caractérisé en ce que** le listel **(18)** délimite la face supérieure **(O**_{**s**}**)** et/ou la face inférieure **(U**_{**s**}**)** du corps moulé **(3).**

6. Emballage selon les revendications 1 et 2, **caractérisé en ce que** la butée **(21)** est constituée comme corps polyédrique **(23),** sur la surface longue, opposée au coin inférieur **(E**_{**E**}**)** du corps moulé **(3),** duquel est agencée la ligne de rupture **(22)** et qui se compose de parties en forme de godet **(24)** contiguës en alternance, dont la surface de fond extérieure **(25)** possède un profilage **(26)** pour l'adhérence de la colle.

7. Emballage selon la revendication 6, **caractérisé en ce que** le profilage **(26)** est formé de rehaussements en forme de cames, de rainures ou de traverses.

8. Emballage selon les revendications 1 et 2, **caractérisé en ce que** la surface de butée **(27)** de la butée **(21)** et la surface de butée correspondante **(10)** du corps moulé **(3)** couvrent un angle (α) de 40 à 50°, de préférence de 45°, par rapport à la tranche et au côté longitudinal **(L**_{**H**}**;S**_{**U**}**)** du corps moulé **(3).**

9. Emballage selon les revendications 1 à 8, **caractérisé en ce que** la hauteur du corps polyédrique **(23)** de la butée **(21)** correspond à la hauteur du listel **(18)** du corps moulé **(3).**

10. Emballage selon la revendication 1, **caractérisé en ce que** le corps creux **(30)** du tourillon **(2)** présente une collerette **(36),** dont le diamètre extérieur est très légèrement inférieur au diamètre de la mortaise **(9)** et dans lequel sont prévus des évidements **(37),** et **en ce que** la mortaise **(9)** possède une collerette **(28)** avec des évidements internes **(29),** sur lesquels sont jointes par moulage avec adhérence de matériau des bandes **(35)** qui sont reliées aux évidements **(37)** du tourillon **(2)** par adhérence de matériau de manière à ce que le tourillon **(2)** saille hors du plan du corps moulé **(3)** par sa surface de fond extérieure **(33),** le tourillon **(2)** pouvant être accueilli par la mortaise **(9)** lors du collage de la surface de fond **(33)** avec la couche de couverture **(4)** et la couche arrière **(5)** par rupture des bandes **(35).**

11. Emballage selon la revendication 1, **caractérisé en ce que** le corps moulé **(3)** possède sur la face supérieure et/ou inférieure un logement **(11)** pour l'insertion d'un support d'enregistrement.

12. Emballage selon la revendication 11, **caractérisé en ce que** le logement **(11)** est limité par une bordure **(12)** réalisée en forme de couronne dentée sur sa face extérieure et formée par un listel **(13)** de forme circulaire.

13. Emballage selon les revendications 1, 11 et 12, **caractérisé en ce que** la bordure **(12)** du logement **(11)** est interrompue par les ouvertures de préhension **(16)** traversant le corps moulé **(3)** destinées à la préhension et au prélèvement du support d'enregistrement hors du logement, lesdites ouvertures étant agencées en direction diagonale par rapport au tourillon **(2).**

14. Emballage selon les revendications 1 à 13, **caractérisé en ce que** se trouvent à proximité de la bordure **(12),** à l'intérieur du logement **(11),** au moins quatre élévations de pose **(17)** en forme de point se faisant vis-à-vis en diagonale, pour la protection du support d'enregistrement.

15. Emballage selon les revendications 1 à 14, **caractérisé en ce que** le logement **(11)** présente une partie constituée d'appuis garnis **(14)** agencés en étoile avec au moins trois saillies de retenue **(15)** dépassant légèrement les appuis garnis.

16. Emballage selon les revendications 1 à 15, **caractérisé en ce que** la pièce de préhension **(20)** possède une cavité en demi-cercle permettant la préhension de la pièce moulée pour faire pivoter et sortir le corps moulé hors de l'espace de logement **(19),** la pièce de préhension ayant une hauteur excédant légèrement la hauteur du listel **(18)** du corps moulé **(3)** et permettant une butée contre la couche de couverture **(4)** et la couche arrière **(5).**

17. Procédé servant à confectionner un emballage selon la revendication 1, selon lequel est fabriqué à partir de papier fort, carton, fibres, matière synthétique ou équivalent, une pièce découpée et pliée pour une enveloppe formée de couvertures avant et arrière et d'une couche arrière reliant les couvertures, et selon lequel est réalisé un corps moulé emboîtable en matière synthétique, et selon lequel le corps moulé est collé de manière pivotante autour d'un tourillon fixe positionné entre les couvertures et une couche de couverture intérieure dans la zone cornière des bords ouverts, dans une mortaise du corps moulé, **caractérisé par** les étapes suivantes,
a) une ligne de rupture **(22)** masquée par la couche de couverture et la couche arrière est réalisée dans le corps moulé, ladite ligne séparant le corps moulé en une butée et une surface de butée lors d'une légère pliure ultérieure de l'emballage entièrement confectionné, et
b) le tourillon **(2)** et la mortaise **(9)** sont reliés par une liaison avec adhérence de matériau de manière adaptée à l'assemblage, ladite liaison étant défaite lors du processus ultérieur de collage pendant la confection par application d'une pression sur le tourillon pressé dans la mortaise du corps moulé.

18. Procédé selon la revendication 17, **caractérisé en ce que** la pliure du corps moulé est effectuée avant ou après l'insertion du support d'enregistrement dans l'emballage.

19. Procédé selon les revendications 17 et 18, **caractérisé en ce que** le processus de collage est effectué avant ou après l'insertion du support d'enregistrement dans l'emballage.

20. Procédé selon les revendications 17 à 19, **caractérisé en ce que** l'insertion du support d'enregistrement dans le logement du corps moulé avant la réalisation du collage produit une fermeture garantie de l'emballage avec la ligne de rupture réalisée à l'étape a).
